# EUROPÄISCHE PATENTSCHRIFT

(11) **EP 2 153 185 B1**
(45) Veröffentlichungstag und Bekanntmachung des Hinweises auf die Patenterteilung: **19.04.2017**
(21) Anmeldenummer: 08717825.7
(22) Anmeldetag: 14.03.2008
(51) Int. Cl.: G01G 3/14, G01G 23/01, G01G 21/24

(54) **JUSTIERBARE PARALLELFÜHRUNG FÜR KOMPAKTE GRAVIMETRISCHE MESSINSTRUMENTE**
ADJUSTABLE PARALLEL GUIDE FOR COMPACT GRAVIMETRIC MEASURING INSTRUMENTS
GUIDAGE PARALLÈLE RÉGLABLE POUR INSTRUMENTS DE MESURE GRAVIMÉTRIQUES COMPACTS

(30) Priorität: 01.06.2007 EP 07109474; 01.06.2007 EP 07109475
(43) Veröffentlichungstag der Anmeldung: 17.02.2010
(73) Patentinhaber: Mettler-Toledo GmbH, 8606 Greifensee (CH)
(72) Erfinder: BURKHARD, Hans-Rudolf, CH-8492 Wila (CH); GENOUD, Dominique, CH-4600 Olten (CH); METZGER, Andreas, CH-8708 Männedorf (CH); BALTISBERGER, Stephan, CH-8625 Gossau (CH); KÖPPEL, Thomas, CH-8618 Oetwil am See (CH)
(74) Vertreter: Mettler-Toledo
(86) Internationale Anmeldenummer: PCT/EP2008/053083
(87) Internationale Veröffentlichungsnummer: WO 2008/145427

(56) Entgegenhaltungen:
- EP-A- 1 726 926
- DE-A1- 3 505 070
- DE-C1- 3 710 997
- US-A- 4 606 421

## Beschreibung

Die vorliegende Erfindung bezieht sich auf eine Parallelführung, vorzugsweise für ein gravimetrisches Messinstrument.

Im Stand der Technik sind viele verschiedene Ausführungen gravimetrischer Messinstrumente bekannt. Viele der bekannten Ausführungen, auch als Waage bezeichnet, bestehen im Wesentlichen aus einer Kraftmesszelle, einem mit der Kraftmesszelle wirkverbundenen Lastaufnehmer, einer den Lastaufnehmer in vertikaler Richtung linear führenden Parallelführung, einer Wägeelektronik und einer Anzeigeeinheit.

Es sind im Stand der Technik verschiedene Funktionsprinzipien von Kraftmesszellen beziehungsweise Messwertaufnehmern wie beispielsweise Dehnungsmessstreifen, Kraftmesszellen mit Saiten oder EMFC- Kraftmesszellen (Electro Magnetic Force Compensation) bekannt.

Bei EMFC- Kraftmesszellen wird das Gewicht der Last entweder direkt oder durch einen oder mehrere Kraftübertragungshebel in einen elektromechanischen Messwertaufnehmer übertragen, welcher ein dem Gewicht der Wägelast entsprechendes elektrisches Signal abgibt, das durch eine Wägeelektronik weiterverarbeitet und zur Anzeige gebracht wird.

Bei Kraftmesszellen mit Dehnungs-Messwertaufnehmer ist ein Verformungskörper mit Dehnungsmessstreifen versehen. Dieser Verformungskörper wird durch die aufgelegte Last elastisch deformiert. Häufig wird der Verformungskörper als Messparallelogramm (Parallelführung mit Dehnungsmessstreifen) ausgestaltet, wodurch definierte Deformationsbereiche beziehungsweise Biegestellen geschaffen werden, in welchen die Dehnungs- Messwertaufnehmer angeordnet sind. Die durch die Verformung des Deformationskörpers gedehnten oder gestauchten Dehnungs- Messwertaufnehmer weisen einen vergleichsweise zum entspannten Zustand veränderten elektrischen Widerstandswert auf, welcher ein Mass für die aufgelegte Last ist.

Bei Saiten- Kraftmesszellen entspricht der mechanische Aufbau weitgehend den EMFC - oder DMS- Kraftmesszellen, mit dem Unterschied, dass an Stelle eines elektromagnetischen Messwertaufnehmers oder den Dehnungsmessstreifen ein Schwingsaiten-Messwertaufnehmer eingesetzt wird. Durch die Last wird eine schwingende Saite gespannt, deren Frequenzänderung wiederum ein Mass für die aufgelegte Last darstellt.

Wie vorangehend erwähnt, werden solche Kraftmesszellen in verschiedenen gravimetrischen Messinstrumenten eingesetzt, so zum Beispiel in Waagen, gravimetrischen Feuchtigkeitsmessgeräten, Wägemodulen und dergleichen.

Bei Wägemodulen handelt es sich im Wesentlichen um Waagen, bei denen die Anzeigeeinheit von der Waage getrennt angeordnet ist, beispielsweise in einer Anlage mit einer zentralen Anzeige für mehrere Wägemodule. Wägemodule werden bevorzugt in automatisierten Produktions- und Testanlagen eingesetzt, in welchen eine Mehrzahl dieser Wägemodule zu einem kompakten Systemverbund vereinigt sind.

Ein solches Wägemodul hat im Wesentlichen einen Aufbau wie er beispielsweise aus Figur 1 der EP 1 726 926 A1 ersichtlich ist. Ein etwa kubisch ausgebildeter feststehender Parallelschenkel des Moduls bildet gleichzeitig den feststehenden Rahmen in welchem der zentrisch angeordnete bewegliche Parallelschenkel des Wägemoduls - hier ein vertikaler beweglicher Stab der oben eine Lastschale trägt - oben und unten durch Membranfedern vertikal geführt wird.

Dieses in seiner Einfachheit bestechende Konzept hat allerdings bisher noch den Mangel, dass für die erforderliche hochgenaue Parallelität der Führungsmembranfedern keine Justiermöglichkeit vorhanden ist. Wie dem Fachmann bekannt ist, werden durch Parallelitätsabweichungen zwischen den Lenkerelementen einer Waagenparallelführung sogenannte Eckenlastfehler, d.h. Wägefehler unter nichtzentrischer Belastung des Lastträgers, verursacht.

Der Eckenlastfehler oder, positiv ausgedrückt, die Eckenlastgenauigkeit ist eine Grundeigenschaft von Waagen mit parallel geführtem Lastaufnehmer. Man könnte zwar versuchen, eine gewünschte Eckenlastgenauigkeit durch erhöhte Präzision in der Fertigung zu erreichen, doch erhöht dies einerseits die Herstellungskosten von Waagen und Wägemodulen, und andrerseits reicht auch die höchste erreichbare Bearbeitungsgenauigkeit einer Werkzeugmaschine nicht aus, um die in Präzisions- und Analysenwaagen verlangte Eckenlastgenauigkeit im Bereich von etwa 1/50'000 bis auf etwa 1/1'000'000 der Wägekapazität zu erreichen.

Es wird deshalb zumindest bei hochpräzisen Waagen grundsätzlich ein anderer Weg eingeschlagen, indem man einerseits zum vornherein eine relative weite Toleranz in der Bearbeitungsgenauigkeit der betreffenden Waagenteile zulässt und dafür jedoch andrerseits an den kritischen Stellen des Parallelführmechanismus Verstellmöglichkeiten vorsieht, mit welchen die Lenkerparallelität soweit einjustiert werden kann, bis die verlangte Eckenlastgenauigkeit erreicht ist. Diese Einjustierung der Eckenlastgenauigkeit erfolgt im Anschluss an die Fertigung an dem nunmehr betriebsfähigen gravimetrischen Messinstrument in einem automatisch oder manuell ausgeführten Prüf- und Justierprozess in welchem gegebenenfalls noch weitere Einstellungen, beispielsweise für den Linearitätsabgleich und die Eichung der Messempfindlichkeit, vollzogen werden.

In einer Parallelführung, das heisst einer Parallelführung des Waagschalenträgers mittels zweier parallelen, im Wesentlichen horizontalen Parallellenkern, werden Eckenlastfehler vorwiegend dadurch verursacht, dass diese Parallellenker von einer idealen, absoluten Parallelität geringfügig abweichen. Dabei entspricht die relative Grösse des Eckenlastfehlers, das heisst das Verhältnis der beobachteten Gewichtsabweichung zur Grösse des betreffenden Testgewichts etwa der den Fehler verursachenden relativen geometrischen Abweichung. Man unterscheidet zwischen einem Eckenlastfehler in der Längsrichtung und einem Eckenlastfehler in der Querrichtung der Parallelführung, entsprechend der Verschieberichtung des Testgewichts auf der Waagschale in der Eckenlastfehlerprüfung der Waage. Ein Eckenlastfehler in der Längsrichtung kommt daher, dass der vertikale Abstand der Parallellenker an dem zum feststehenden Parallelschenkel verbundenen Ende nicht genau gleich ist wie am andern, mit dem beweglichen Parallelschenkel verbundenen Ende. Ein Eckenlastfehler in der Querrichtung wird dagegen durch eine gegenseitige Verwindung der beiden Parallellenker gegeneinander verursacht, d.h. ein Zustand bei dem der Abstand zwischen den Parallelogrammlenkern über die Breite der Parallelogrammlenker variiert.

Eine derartige Eckenlasteinstellung wird beispielsweise in der US 4 606 421 A1 offenbart. Der feststehende Parallelschenkel der offenbarten Parallelführung weist in übereinander angeordneten Ebenen je eine elastisch deformierbare Biegestelle auf. Die Schwenkachse der ersten Biegestelle erstreckt sich in der Längsrichtung der Parallelführung, während die Schwenkachse der zweiten Biegestelle orthogonal zur Längsrichtung der Parallelführung angeordnet ist. Mittels vier Einstellschrauben lässt sich der obere Endbereich des feststehenden Parallelschenkels zum unteren Endbereich des feststehenden Parallelschenkels verschwenken und dadurch lassen sich sowohl die Eckenlastabweichung in Längsrichtung und in Querrichtung justieren.

Wie bereits erwähnt, sind Wägemodule der oben genannten Art, wovon ein Beispiel in EP 1 726 926 A1 beschrieben und abgebildet ist, nicht mit einer Justiermöglichkeit für die Parallelität der Lenkermembranfedern ausgerüstet, so dass mit diesen Modulen auch mit präzisen und entsprechend aufwändigen Fertigungsmethoden nur eine beschränkte Eckenlastgenauigkeit erreicht werden kann.

Die vorliegende Erfindung hat deshalb die Aufgabe, eine Parallelführung für ein gravimetrisches Messinstrument, vorzugsweise für ein kompaktes Wägemodul anzugeben, welche eine konstruktiv einfache, funktionssichere und kostengünstige Justiermöglichkeit für die Parallelität der Parallellenker aufweist, womit eine verlangte Eckenlastgenauigkeit eingestellt werden kann, so dass in der Fertigung einer erfindungsgemässen Parallelführung keine engen und schwer einzuhaltenden Toleranzen gesetzt werden müssen.

Diese Aufgabe wird durch eine Parallelführung gemäss dem Anspruch 1 erfüllt. Die erfindungsgemässe Parallelführung, welche in einem gravimetrischen Messinstrument einsetzbar ist, beinhaltet einen im Betriebszustand der Parallelführung vertikal angeordneten, einen oberen und einen unteren Endbereich aufweisenden feststehenden Parallelschenkel. Der feststehende Parallelschenkel umschliesst einen beweglichen Parallelschenkel, dessen Mittellängsachse im Betriebszustand vertikal verläuft. Ferner weist die Parallelführung ein am oberen Endbereich festgelegtes erstes Parallellenkerelement und ein am unteren Endbereich festgelegtes zweites Parallellenkerelement auf, mittels welcher Parallellenkerelemente der bewegliche Parallelschenkel mit dem feststehenden Parallelschenkel verbunden und vertikal beweglich geführt ist. Der bewegliche Parallelschenkel ist mit einem Lastaufnehmer und mit einer Kraftmesszelle in lastübertragender Weise verbindbar.

Der obere Endbereich und der untere Endbereich sind über mindestens ein Biegestellenpaar und/oder über mindestens ein Kugelgelenk und/oder über mindestens eine ringförmige Einschnürung miteinander verbunden, wodurch die Endbereiche zur Korrektur eines Eckenlastfehlers gegeneinander um mindestens eine Schwenkachse verschwenkbar sind.

Sofern ein Biegestellenpaar vorhanden ist, verläuft die mindestens eine Schwenkachse durch die zwei Biegestellen eines Biegestellenpaares, wobei die Mittellängsachse des beweglichen Parallelschenkels in einer senkrechten Ebene zwischen den beiden Biegestellen eines Biegestellenpaars angeordnet ist. Die Biegestellen sind somit die Verbindungsstellen zwischen dem oberen und dem unteren Endbereich.

Sofern ein Kugelgelenk vorhanden ist, ist die mindestens eine Schwenkachse in einer, eine Berührungskreislinie des Kugelgelenks beinhaltenden Ebene angeordnet, wobei die Mittellängsachse des beweglichen Parallelschenkels innerhalb der Berührungskreislinie des Kugelgelenks angeordnet ist. Mit Berührungskreislinie wird die kreislinien- oder kreisringförmige Berührungsstelle zwischen den zwei Gelenkteilen des Kugelgelenks bezeichnet. Die Berührungskreislinie kann auch dahingehend verstanden werden, dass eine unendliche Anzahl von Berührungspunkten vorhanden sind. Ein Kugelgelenk kann beispielsweise auch soweit reduziert werden, dass nur noch einzelne Abschnitte der Berührungskreislinie vorhanden sind. Je nachdem, welche Rundheit die Gelenkteile im Bereich der Berührungskreislinie aufweisen, ergeben sich zumindest zwei Berührungspunkte. Die Berührungspunkte der Berührungskreislinie sind somit ebenfalls die Verbindungsstellen zwischen dem oberen und dem unteren Endbereich. Beim Kugelgelenk ist die Richtung der Schwenkachse nicht mehr vorgegeben, wie dies durch die Anordnung von Biegestellenpaaren der Fall ist. Die Ausrichtung der Schwenkachse in der Ebene wird erst beim Justiervorgang festgelegt.

Sofern eine ringförmige Einschnürung vorhanden ist, ist die mindestens eine Schwenkachse in einer, die neutrale Faser der ringförmigen Einschnürung beinhaltenden Ebene angeordnet und die Mittellängsachse des beweglichen Parallelschenkels ist innerhalb einer Bohrung der ringförmigen Einschnürung angeordnet. In der Festigkeitslehre wird mit neutraler Faser diejenige Stelle eines Biegeteils bezeichnet, welche infolge eines Biegens weder gestaucht noch gestreckt wird. Auch die ringförmige Einschnürung weist wie bereits ausführlich beim Kugelgelenk beschrieben, eine unendliche Anzahl von Berührung- beziehungsweise Verbindungspunkten auf. Diese Verbindungspunkte sind somit ebenfalls die Verbindungsstellen zwischen dem oberen und dem unteren Endbereich. Durch die ringförmige Einschnürung wird eine allseitig verschwenkbare Verbindung zwischen den Endbereichen des feststehenden Parallelschenkels geschaffen. Die kurze ringförmig ausgebildete Einschnürung kann so ausgestaltet sein, dass sie durch angemessene Kraft- oder Drehmomentanwendung in beliebiger Richtung biegbar ist, wodurch eine Nichtparallelität der Lenkermembranfedern und damit ein Eckenlastfehler der Parallelführung bezüglich einer beliebigen Richtung korrigierbar sind. Die Ausrichtung der Schwenkachse in der Ebene wird wie beim Kugelgelenk erst beim Justiervorgang festgelegt.

Die drei Ausgestaltungsmöglichkeiten, wie der obere Endbereich und der untere Endbereich der erfindungsgemässen Parallelführung miteinander verbunden ist, haben alle gemeinsam, dass die Mittellängsachse des beweglichen Parallelschenkels immer zwischen mindestens zwei Verbindungsstellen angeordnet ist.

Dies hat entscheidende Vorteile. Durch die mindestens zwei getrennt voneinander angeordneten Verbindungsstellen wird eine hervorragend präzise, die Lage der Schwenkachse erhaltende Verbindung geschaffen, welche nur durch die am Lastaufnehmer wirkenden Kräfte nahezu ausgeglichen belastet werden. Eine solche Präzision ist bei der Eckenlasteinstellung, die in der US 4 606 421 A1 offenbart wird, nicht erreichbar. Die Verbindungsstellen in der US 4 606 421 A1 müssen einen bestimmten Materialquerschnitt aufweisen, damit sie die dauernd aufrecht erhaltenen und somit dauernd die Verbindungsstellen belastenden Schraubenkräfte der Einstellschrauben genügend abstützen können, so dass sich im Betrieb die Verbindungsstelle nicht setzt, das heisst plastisch deformiert und dadurch die Parallelführung unbrauchbar wird. Aufgrund der gegebenen Breite der Parallelführung weist diese Eckenlasteinstellung ferner Verbindungsstellen auf, deren Querschnitte ein viel zu ungünstiges Längen- Breitenverhältnis aufweisen, um eine präzise Schwenkachse zu definieren. Da zur Einstellung der Eckenlast der obere Endbereich zum unteren Endbereich nur unter ausserordentlich kleinem Schwenkwinkel verschwenkt werden muss, wirken sich Material- Inhomogenitäten und Bearbeitungstoleranzen bei derart ausgestalteten Verbindungsstellen ausserordentlich stark auf die tatsächliche Lage der Schwenkachse aus. Die Lage und Ausrichtung der Schwenkachse kann sich bei breit ausgestalteten Verbindungsstellen ferner während des Verschwenkens kontinuierlich verändern. Dies wirkt sich aber negativ auf die Einstellbarkeit zwischen der Eckenlasteinstellung in Längsrichtung und der Eckenlasteinstellung in der Querrichtung aus und erschwert dadurch den Einstellvorgang.

Wäre in der erfindungsgemässen Eckenlasteinstellung nur eine Verbindungsstelle am feststehenden Parallelschenkel vorhanden, würde ferner die Gefahr bestehen, dass diese Verbindungsstelle unter einer Belastung des Lastaufnehmers, insbesondere bei daran angreifenden Querkräften einknickt oder einfedert, wodurch die geometrischen Verhältnisse der Parallelführung verändert und das Wägesignal der Kraftmesszelle entscheidend negativ beeinflusst würde. Dadurch, dass die Mittellängsachse des beweglichen Parallelschenkels zwischen den mindestens zwei Verbindungsstellen angeordnet ist, werden die am Lastaufnahmebereich und damit an den Endbereichen wirkenden Kräfte im feststehenden Parallelschenkel sicher abgestützt. Dies führt dazu, dass im Gegensatz zum Stand der Technik keine Justierschrauben eingesetzt werden müssen, welche die Verbindungsstellen verspannen und dadurch zusätzlich belasten, um ein Einknicken unter Belastung zu verhindern. Bei der erfindungsgemässen Parallelführung können deshalb die Verbindungsstellen ausserordentlich klein dimensioniert werden. Wie weiter unten ausführlicher beschrieben, kann sich ferner sogar die Verwendung von Feststellelementen erübrigen.

Zum feststehenden Parallelschenkel gehören die beiden Endbereiche sowie alle Teile, welche zwischen den beiden Endbereichen angeordnet sind und auf der feststehenden Seite der Parallelführung dem Verbinden der Parallellenker dienen. Die Mittellängsachse des feststehenden Parallelschenkels entspricht der Schwerachse oder der neutralen Faser des ganzen Parallelschenkels. Eine, den feststehenden Parallelschenkel mit dem Untergrund verbindende Abstützung, beispielsweise ein Waagengehäuse, gehört somit nicht mehr zum feststehenden Parallelschenkel.

Das Merkmal "umschliessen" ist soweit auszulegen, dass der bewegliche Parallelschenkel innerhalb einer Projektionsfläche des feststehenden Parallelschenkels angeordnet ist. Das heisst, dass beispielsweise ein feststehender Parallelschenkel mit C-förmigem Querschnitt einen beweglichen Parallelschenkel genauso umschliesst, wenn der bewegliche Parallelschenkel innerhalb der Ausnehmung des C-förmigen Parallelschenkels angeordnet ist, obwohl der C-förmige Parallelschenkel einseitig offen ist.

In einer vorzugsweisen Ausgestaltung der Parallelführung weisen die mindestens eine Schwenkachse und die Mittellängsachse des beweglichen Parallelschenkels einen gemeinsamen Schnittpunkt auf. Bei Versuchen konnte festgestellt werden, dass sich durch die erfindungsgemässe Anordnung mit zwei Verbindungsstellen und durch einen gemeinsamen Schnittpunkt der Achsen keine oder nahezu keine Nullpunktverschiebung infolge der Eckenlasteinstellung einstellt, da die durchschnittliche Distanz zwischen den Endbereichen des feststehenden Bereiches weitgehend unverändert bleibt. Dadurch ergibt sich ein zusätzlicher Vorteil, welcher sich bei einer Parallelführung mit nur einer Verbindungsstelle, wie sie beispielsweise in der US 4 606 421 A1 offenbart ist, nie ergeben kann. Bei diesen Parallelführungen wird der Lagerabstand zwischen dem unteren und dem oberen Biegelager verändert. Die Eckenlasteinstellung in Längsrichtung beeinflusst nun die Eckenlasteinstellung in der Querrichtung und umgekehrt, so dass beim Einstellvorgang in mehreren Schritten iterativ vorgegangen werden muss, bis die gewünschte Eckenlastgenauigkeit in der Längs- und in der Querrichtung eingestellt ist.

In einer weiteren Ausgestaltung der Parallelführung ist die mindestens eine Schwenkachse zudem orthogonal zur Mittellängsachse des feststehenden Parallelschenkels angeordnet. Besondere Vorteile daraus ergeben sich beim Einstellen der Eckenlastgenauigkeit. Wird auf den Lastaufnehmer ein Testgewicht in der Mitte aufgelegt und tariert, kann die Eckenlastgenauigkeit der erfindungsgemässen Parallelführung auf einfachste Weise eingestellt werden. Beim anschliessenden Verschieben des Testgewichts zwischen zwei diametral voneinander liegenden Punkten auf dem Lastaufnehmer, ergeben sich durch die symmetrische Anordnung der Schwenkachse und unter der Voraussetzung, dass derselbe Abstand zur Mittellängsachse eingehalten wird, im Betrag identische Messsignalabweichungen. Diese unterscheiden sich lediglich im Vorzeichen.

Das Justierverfahren zur Einstellung der Eckenlastgenauigkeit dieser Parallelführung beziehungsweise eines gravimetrischen Messinstruments mit dieser Parallelführung ist daher äusserst einfach.

In einem ersten Schritt wird ein Testgewicht in der Mitte des Lastaufnehmers platziert und die Anzeige auf "Null" gestellt (tariert).

In einem zweiten Schritt wird das Testgewicht, vorzugsweise (und wenn vorhanden) in orthogonaler Richtung zu einer ersten Schwenkachse verschoben und am Rande des Lastaufnehmers platziert.

In einem dritten Schritt wird der obere Endbereich zum unteren Endbereich soweit um die erste Schwenkachse verschwenkt, bis die Anzeige den Wert "Null" anzeigt.

In einem vierten Schritt wird das Testgewicht in Richtung der ersten Schwenkachse verschoben und am Rande des Lastaufnehmers platziert.

In einem fünften Schritt wird der obere Endbereich zum unteren Endbereich um eine zur ersten Schwenkachse orthogonal angeordneten zweiten Schwenkachse soweit verschwenkt, bis die Anzeige den Wert "Null" anzeigt.

Zur Kontrolle kann das Testgewicht jeweils auf einen diametral gelegenen Punkt des Lastaufnehmers gelegt werden. Versuche haben gezeigt, dass die Anzeige bei der Kontrolle lediglich kleinste Abweichungen angezeigt hat.

Das Justierverfahren einer Parallelführung mit Kugelgelenk oder mit einer ringförmigen Einschnürung ist noch einfacher als das vorangehend beschriebene Verfahren. Beim Einstellen der Eckenlastgenauigkeit kann nach dem Tarieren durch Verschieben des Testgewichtes entlang des Lastaufnehmerrandes die Richtung der grössten Abweichung ermittelt werden. Anschliessend wird durch Verschwenken um eine Verschwenkachse orthogonal zur ermittelten Richtung die Endbereiche soweit gegeneinander verschwenkt, bis die Anzeige den Wert "Null" anzeigt.

Um die eingestellte Verschwenkung zu sichern, kann mindestens ein Feststellelement zur Fixierung zwischen den verschwenkbaren Endbereichen vorhanden sein. Gegebenenfalls kann das Feststellelement auch der Justierung der verschwenkbaren Endbereiche dienen. Die Feststellmittel fixieren lediglich die gemachte Einstellung, sie müssen keinerlei am Lastaufnehmer wirkende Kräfte wie die im Stand der Technik bekannten Justierschrauben, aufnehmen.

Justierschrauben sind üblicherweise aus anderen Materialien gefertigt als der feststehende Parallelschenkel. Dadurch weisen sie einen anderen Ausdehnungskoeffizient und ein anderes Elastizitätsmodul auf als derselbe. Da die Justierschrauben auch einen Teil der auf den Lastaufnehmer einwirkenden Kräfte abstützen, können thermische Einflüsse bei den aus dem Stand der Technik bekannten Parallelführungen zur temporären Verstellung der Parallelführung führen und dadurch die Eckenlastabweichung des gravimetrischen Messinstruments sehr temperaturabhängig machen. Da die erfindungsgemässe Parallelführung keine derartigen Justierschrauben aufweist, ergibt sich somit daraus noch ein weiterer Vorteil, nämlich eine wesentliche Verbesserung des Temperaturverhaltens des gravimetrischen Messinstruments.

Vorzugsweise ist der feststehende Parallelschenkel, eine vertikale Mittellängsachse aufweisend, rotationssymmetrisch ausgestaltet und die Parallellenkerelemente als weichelastische Lenkermembranfedern ausgebildet.

Wie weiter oben ausgeführt, erleichtert eine möglichst symmetrische Ausgestaltung der Parallelführung ein sehr einfaches Verfahren zur Einstellung der Eckenlastgenauigkeit. Idealerweise ist deshalb der bewegliche Parallelschenkel zum feststehenden Parallelschenkel derart angeordnet, dass die Mittellängsachse des feststehenden Parallelschenkels und die Mittellängsachse des beweglichen Parallelschenkels zusammenfallen.

Durch mindestens zwei seitliche Ausnehmung zwischen dem oberen Endbereich und dem unteren Endbereich des feststehenden Parallelschenkels ist mindestens ein Biegestellenpaar ausgebildet. Jede Biegestelle ist im Wesentlichen eine schmale, unter Kraft- oder Drehmomentanwendung elastisch und/oder plastisch deformierbare Materialbrücke, wobei durch Deformation der beiden Materialbrücken die gegeneinander verschwenkbaren Endbereiche und dadurch die an den Endbereichen ausgebildeten Festlegungsstellen der festgelegten Parallellenkerelemente um mindestens eine Schwenkachse verschwenkbar und durch die Verschwenkung ein Eckenlastfehler der Parallelführung korrigierbar ist. Die deformierbare Materialbrücke kann Bestandteil eines monolithisch ausgebildeten Parallelschenkels sein, aber auch ein Einzelteil, welches zusammen mit weiteren Teilen den feststehenden Parallelschenkel bildet. Selbstverständlich kann auch die ganze Parallelführung monolithisch ausgebildet sein.

Die erfindungsgemässe Parallelführung kann in einer zwischen den Endbereichen liegenden, im Betriebszustand der Parallelführung horizontalen ersten Ebene zwei erste Ausnehmungen aufweisen, die von diametral gegenüberliegenden Seiten des feststehenden Parallelschenkels bis nahe zu einem ersten Durchmesser des feststehenden Parallelschenkels geführt sind, so dass zwischen den zwei ersten Ausnehmungen zwei schmale erste Materialbrücken ausgebildet sind. Ferner sind in einer zweiten horizontalen Ebene, welche in Bezug auf die Betriebsstellung der Parallelführung unterhalb der ersten horizontalen Ebene verläuft, zwei zweite Ausnehmungen ausgebildet, welche von diametral gegenüberliegenden Ausgangspunkten senkrecht unterhalb der genannten ersten Materialbrücken bis nahe zu einem zweiten Durchmesser des feststehenden Parallelschenkels geführt sind, so dass zwischen den beiden zweiten Ausnehmungen ebenfalls nur schmale zweite Materialbrücken ausgestaltet sind. Dadurch ist zwischen den ersten und zweiten Ausnehmungen ein Zwischenringbereich ausgebildet, über welchen Zwischenringbereich der obere Endbereich durch die zwei ersten Materialbrücken und durch die beiden zweiten Materialbrücken mit dem unteren Endbereich verbunden ist.

Die ersten und zweiten Materialbrücken sind als deformierbare Biegestellenpaare ausgebildet und bilden zusammen mit dem Zwischenringbereich eine kardanische Verbindung der Endbereiche.

Selbstverständlich kann diese kardanische Verbindung der Lagerung eines Schiffkompasses ähnlich in einer einzigen Ebene angeordnet sein, wobei im Bereich der kardanischen Verbindung der obere Endbereich, der Zwischenring und der untere Endbereich voneinander unterschiedliche Ausdehnungen in einer Ebene orthogonal zur Mittellängsachse aufweisen müssen.

Im Rahmen der vorliegenden Beschreibung beziehen sich Ausdrücke wie "oben", "unten", "horizontal", "vertikal", etc., stets auf die Orientierung der Parallelführung, beziehungsweise des gravimetrischen Messinstruments, in welchem die Parallelführung verwendet wird, im normalen Betriebszustand, mit anderen Worten auf die Richtung der Schwerkraft.

Die schmalen Materialbrücken sind nun nachgiebig genug, dass sie als definierte Biegestellen (nachfolgend analog zu den Materialbrücken als erste und zweite Biegestellen bezeichnet) funktionieren können, so dass der durch die ersten Biegestellen verlaufende erste Durchmesser eine erste Schwenkachse und der durch die zweiten Biegestellen verlaufende zweite Durchmesser eine zweite Schwenkachse bildet. Wie aus dem Vorstehenden geschlossen werden kann, verlaufen die erste und die zweite Schwenkachse orthogonal zueinander, sodass durch die mit den beschriebenen Ausnehmungen erzeugten ersten und zweiten Biegestellen zusammen mit dem Zwischenringbereich eine schwenkbare Lagerung des ringförmigen Endbereichs mit der oberen Lenkermembranfeder erreicht wird, welche wie oben erwähnt mit einer kardanischen Aufhängung vergleichbar ist.

Um den feststehenden Parallelschenkel der Parallelführung noch besser einstellbar zu machen, können nach den zwei ersten Ausnehmungen durch weitere Ausnehmungen weitere deformierbare Materialbrücken ausgebildet werden. So können durch weitere Paare von Ausnehmungen in weiteren Horizontalebenen, welche in Bezug auf den Betriebszustand der Parallelführung unterhalb der ersten Horizontalebene verlaufen und von jeweils diametral gegenüberliegenden Ausgangspunkten bis nahe zu einem Durchmesser der Feststehender Parallelschenkel geführt sind, entsprechend weitere Paare von diametral gegenüberliegenden Materialbrücken ausgebildet werden. Diese Paare sind vorzugsweise jeweils um gleiche Winkelsegmente gegeneinander versetzt, wobei die so gebildeten Materialbrücken zusammen mit den durch die Ausnehmungen erzeugten Zwischenringbereichen eine allseitig schwenkbare Lagerung des die dort befindliche Lenkermembranfeder umfassenden Endbereichs ermöglichen.

Die Orthogonalität der beiden Schwenkachsen ist zwar von Vorteil, jedoch kein absolutes Erfordernis. So könnten die beiden zweiten Biegestelle anstatt um 90º um einen beliebigen andern, wesentlich von null verschiedenen Winkel versetzt sein, wie beispielsweise durch entsprechende beidseitige Ausnehmungen in drei übereinanderliegenden Horizontalebenen. Dadurch werden ein erstes, zweites, und drittes Biegestellenpaar gebildet, welche jeweils um 60º gegeneinander verdreht sind.

Da der feststehende Parallelschenkel mehrere Abschnitte aufweist, welche zwecks Eckenlasteinstellung gegeneinander verschwenkbar sind, kann der feststehende Parallelschenkel am oberen Endbereich oder am unteren Endbereich, oder, sofern vorhanden, an einem Zwischenbereich gegen den Untergrund abgestützt werden.

Vorteilhafterweise ist die mindestens eine schmale Materialbrücke durch die Kraft- oder Drehmomentanwendung plastisch deformierbar, so dass durch die plastische Deformation der Materialbrücke eine bleibende Verschwenkung der Endbereiche zueinander um die mindestens eine Schwenkachse, und damit eine bleibende Korrektur des Eckenlastfehlers erzeugbar ist. Um dies zu erreichen, müssen die als Biegestellen funktionierenden Materialbrücken noch so steif ausgebildet sein, dass einerseits der zu verschwenkende Endbereich hinreichend fest in seiner nominal horizontalen Lage fixiert ist, dass jedoch eine Feineinstellung dieser horizontalen, bzw. zur unteren Lenkermembranfeder parallelen Lage durch eine angemessene Kraft- oder Drehmomentanwendung möglich ist, beispielsweise durch Ansetzen eines Hebelwerkzeugs an dem ringförmigen oberen Endbereich, wodurch eine bleibende plastische Verformung der Biegestelle erzeugt wird. Dadurch erübrigt sich die Verwendung von Einstellelementen wie Stellschrauben, Keile und dergleichen mehr, welche die Verschwenkung aufrechterhalten. Selbstverständlich können diese Einstellelemente aber zur Sicherung der Verschwenkung, insbesondere bei mechanisch hoch beanspruchten Parallelführungen, eingesetzt werden.

Um eine Verschwenkung genau einzustellen, ist es vorteilhaft, wenn der jeweilige justierbare Endbereich des feststehenden Parallelschenkels Ansatzstellen zum Ansetzen eines geeigneten, ein Drehmoment erzeugenden und nach der Justierung wieder entfernbaren Werkzeugs aufweist. Am einfachsten sind solche Ansatzstellen am feststehenden Parallelschenkel mittels Bohrungen erzeugbar. Sofern die Aussparungen schmale Einschnitte sind, können die durch die Einschnitte gebildeten Flanken als Ansatzstellen für einen in den Einschnitt eingreifenden, brecheisenförmigen Hebel dienen.

Je nach Ausgestaltung der Parallelführung kann der justierbare Endbereich des feststehenden Parallelschenkels für die Kraft- oder Drehmomentanwendung auch geeignete Stellmittel in der Form von Stellschrauben, Exzenterschrauben, Differentialgewindeschrauben, verschiebbare Keile, Hebel oder Konuszapfen aufweisen.

Idealerweise ist in der Betriebsstellung der Parallelführung der feststehende Parallelschenkel ein im Wesentlichen gerader, senkrecht stehender, kreisrunder Hohlzylinder. Dadurch können an beliebiger Stelle am Umfang Ausnehmungen angeordnet werden.

Der feststehende Parallelschenkel kann aber auch ein polygonales, insbesondere quadratisches, hexagonales oder oktogonales Rohrprofil sein. Vorzugsweise ist der feststehende Parallelschenkel als monolithischer Rohrabschnitt ausgebildet, in welchen die Aussparungen mittels Fräsen, Schleifen, Bohren, Erodieren und dergleichen erzeugt worden sind. Um die Bauhöhe der Parallelführung gering zu halten, ist es von Vorteil, wenn die Aussparungen als schmale Einschnitte ausgestaltet sind.

Je nach Ausgestaltung des gravimetrischen Messinstruments kann die Kraftmesszelle zwischen den Parallelschenkeln der Parallelführung angeordnet sein. Um den uneingeschränkten Zugang zur Kraftmesszelle und sofern vorhanden, zu Komponenten einer Signalverarbeitungseinheit zu ermöglichen, kann der feststehende Parallelschenkel eine seitliche Zugangsöffnung aufweisen.

Gegebenenfalls ist aber ein solcher Zugang unerwünscht, um Manipulationen am gravimetrischen Messinstrument durch Dritte zu verhindern. Alle Teile des gravimetrischen Messinstruments mit Ausnahme der Anzeigeeinheit, wie vorangehend definiert ein Wägemodul, könnten innerhalb der Parallelführung angeordnet sein. Um sich zur Kraftmesszelle und dessen Elektronikkomponenten Zugang zu verschaffen, müsste zuerst die Parallelführung zerlegt werden, was unweigerlich zur Dejustierung derselben führen würde. Das unrechtmässig geöffnete Wägemodul könnte durch Überprüfung der Eckenlastgenauigkeit eruiert und aus dem Einsatz gezogen werden.

In Kenntnis des vorliegenden Erfindungsgegenstandes sind auch die nachfolgend beschriebenen Abwandlungen denkbar, welche ebenfalls als Teil der offenbarten Erfindung zu betrachten sind.

Um den Erfindungsgegenstand zu beschreiben, wurde vorangehend aus Gründen einer klaren Darstellung konsequent der umfassende Parallelschenkel als feststehender Parallelschenkel bezeichnet, welcher den beweglichen Parallelschenkel umfasst. Es ist offensichtlich, dass der umfassende Parallelschenkel, sofern dieser mit der Kraftmesszelle und dem Lastaufnehmer wirkverbunden wird, auch der bewegliche Parallelschenkel sein kann und der von diesem umfasste Parallelschenkel als feststehender Parallelschenkel gegen den Untergrund abgestützt sein kann.

Ferner wurde in der vorangehenden Beschreibung aus Gründen einer klaren Darstellung konsequent darauf verwiesen, dass die Verschwenkbarkeit der Endbereiche am feststehenden Parallelschenkel durch eine entsprechende Ausgestaltung des feststehenden Parallelschenkels ermöglicht wird. Selbstverständlich kann eine entsprechende Ausgestaltung auch am beweglichen Parallelschenkel erfolgen.

Mögliche Ausführungsvarianten, bei welchen beispielsweise zwischen den Endbereichen ein anderes Element angeordnet ist welches ein Verschwenken ermöglicht und die Lage der Endbereiche zueinander beispielsweise über Feststellmittel eingestellt wird, sind ebenfalls als Bestandteil der vorliegenden Erfindung zu betrachten. So kann die Parallelführung dem oberen und unteren Endbereich des feststehenden Parallelschenkels einen deformierbaren Metall-Faltenbalg oder einen Gummiring aufweisen und mindestens ein Feststellelement zwischen den Endbereichen zur Fixierung und Justierung vorhanden sein.

Einzelheiten des gravimetrischen Messinstruments, insbesondere der erfindungsgemässen Parallelführung sowie des Verfahrens zu seiner Justierung werden im Folgenden anhand der Zeichnungen gemäss nachstehender Übersicht näher erläutert.
- Fig. 1: zeigt eine perspektivische Ansicht einer erfindungsgemässen Parallelführung;
- Fig. 2: zeigt die Parallelführung von Figur 1 in Aufsicht in Richtung der ersten Schwenkachse gesehen und illustriert das Verschieben des Testgewichts für die Ermittlung des Eckenlastfehlers;
- Fig. 3: zeigt im Wesentlichen die Parallelführung von Figur 1 in Aufsicht mit verschwenktem ersten Endbereich und deformierter Biegestelle sowie mit einem Feststellmittel;
- Fig. 4: zeigt im Wesentlichen die Parallelführung von Figur 3 in Aufsicht mit verschwenktem ersten Endbereich, wobei an Stelle der Biegestelle ein Kugelgelenk zwischen dem Gehäuse Hauptteil und dem ersten Endbereich angeordnet ist;
- Fig. 5: zeigt als Variante zu den vorangehenden Figuren eine Parallelführung, worin der obere ringförmige Endbereich um eine in der Zeichenebene liegende x-Achse und der untere ringförmige Endbereich um eine zur Zeichenebene orthogonale y-Achse verschwenkbar ist;
- Fig. 6: zeigt eine Ausführung der Parallelführung mit drei um je 60°versetzten, durch Biegestellenpaare geformten Schwenkachsen und
- Fig. 7: zeigt eine Ausführung der Parallelführung, in welcher eine allseitige Verschwenkbarkeit des oberen ringförmigen Endbereiches durch eine am feststehenden Parallelschenkel ausgebildete ringförmige, dünnwandige, und ebenfalls plastisch verformbare Einschnürung erreicht wird.

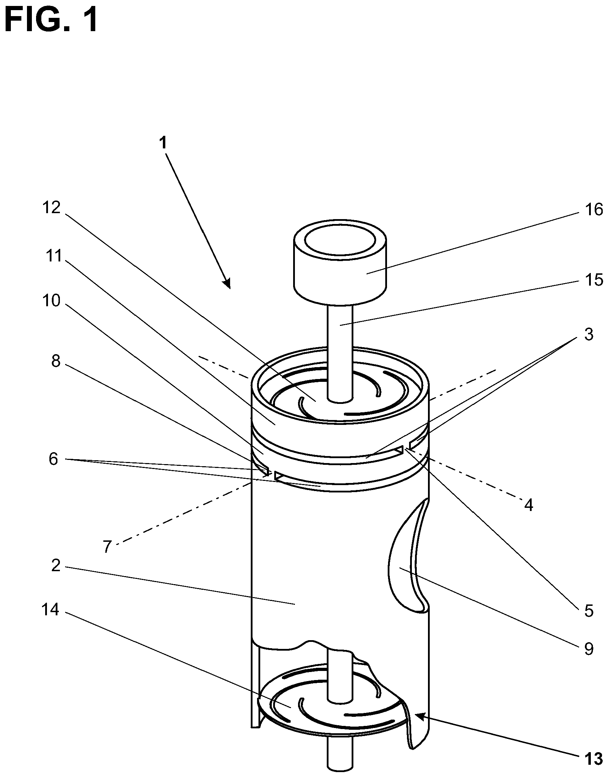

Figur 1 zeigt eine erfindungsgemässe Parallelführung 1 in dreidimensionaler Darstellung. Man erkennt den feststehenden Parallelschenkel 2, welcher am oberen Ende mit ersten horizontalen Ausnehmungen 3 versehen ist, welche den feststehenden Parallelschenkel 2 bis nahe zu einem Durchmesser 4 durchtrennen, so dass nur zwei diametral gegenüberliegende Materialbrücken 5 (nur eine davon in der Figur 1 sichtbar) stehenbleiben. Unterhalb der ersten horizontalen Ausnehmungen 3 liegen, um 90º versetzt, die zweiten horizontalen Ausnehmungen 6 und die sich auf dem Durchmesser 7 diametral gegenüberliegenden Materialbrücken 8 (nur eine davon in der Figur sichtbar). Eine Öffnung 9 im feststehenden Parallelschenkel 2 gibt Zugang zum Zwischenraum im Innern des feststehenden Parallelschenkels 2, beispielsweise zu einer dort angeordneten Kraftmesszelle (in der Figur 1 nicht sichtbar). Ferner können im Zwischenraum auch die gesamte Signalverarbeitungseinheit oder Komponenten der Signalverarbeitungseinheit wie beispielsweise ein Speichermodul (EAROM) mit Abgleichdaten, eine Analog/Digital-Wandlerschaltung und ein Positionsgeber angeordnet sein. Die Abgleichdaten sind im Wesentlichen unmittelbar vor der Auslieferung der Kraftmesszelle ermittelte, kraftmesszellenspezifische Korrekturwerte, auf welche die mit der Kraftmesszelle verbundene Signalverarbeitungseinheit zurückgreifen kann. Selbst eine Anzeigeeinheit könnte bei entsprechender Grösse des Zwischenraumes darin untergebracht werden.

Durch die Materialbrücken 5 und 8 und den dazwischen liegenden Ringbereich 10 wird eine quasi- kardanische Lagerung des ringförmigen Endbereichs 11 des feststehenden Parallelschenkels 2 gebildet. Der ringförmige Endbereich 11 bildet die Randeinfassung der oberen Lenkermembranfeder 12. Im Innern des unteren Endbereichs 13 des feststehenden Parallelschenkels 2 ist in analoger Weise die untere Lenkermembranfeder 14 eingefasst. Ein im feststehenden Parallelschenkel 2 zentrisch angeordneter, vertikal beweglicher Parallelschenkel 15 ist mit den beiden Lenkermembranfedern 12 und 14 verbunden und wird durch sie innerhalb eines beschränkten vertikalen Bewegungsspielraums geführt. Der vertikale bewegliche Parallelschenkel 15 bildet zudem das Kraftübertragungsglied zwischen dem Lastaufnehmer 16 und der im Innern des feststehenden Parallelschenkels 2 befindlichen Kraftmesszelle.

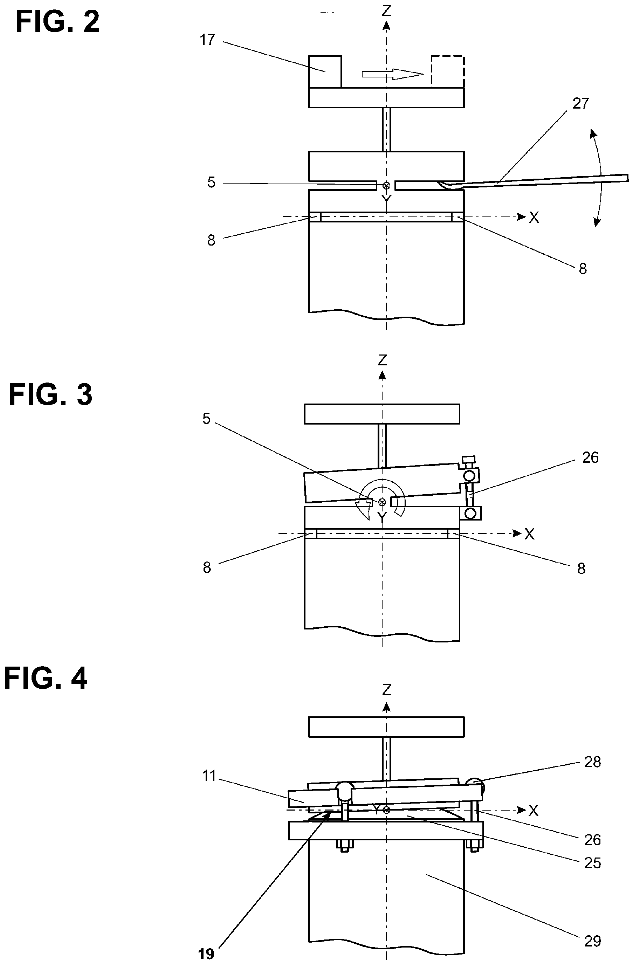

Die Figuren 2 und 3 zeigen den oberen Teil des feststehenden Parallelschenkels 2 mit den vorstehend beschriebenen Ausnehmungen und Biegestellen in einer schematischen Detailansicht von vorne. Zur räumlichen Orientierung wird auf ein kartesisches Koordinatensystem Bezug genommen, worin die x-Richtung in der Zeichenebene durch die beiden zweiten Biegestelle 8, die y-Richtung senkrecht nach hinten in Bezug auf die Zeichenebene durch die beiden ersten Biegestellen 5, und die z-Achse senkrecht als Symmetrieachse des kreiszylindrischen feststehenden Parallelschenkels 2 verläuft. Abgesehen davon, dass die durch die Biegestellen definierten Schwenkachsen in verschiedenen Horizontalebenen liegen, besteht in dieser Anordnung sowohl geometrisch als auch in mechanischer Hinsicht bezüglich ihres Justierverhaltens kein Unterschied zwischen der x-Richtung und der y-Richtung. Ein Eckenlastfehler in x-Richtung (d.h. ein Unterschied der angezeigten Gewichtsbeträge, wenn ein Testgewicht 17 auf der Waagschale 16 in der x-Richtung z.B. von links nach rechts verschoben wird, wie in Figur 2 dargestellt) wird dadurch korrigiert, dass der ringförmige Endbereich 11 um die y-Achse verschwenkt wird. Analog dazu wird ein Eckenlastfehler in y-Richtung (d.h. ein Unterschied der angezeigten Gewichtsbeträge, wenn ein Testgewicht auf der Waagschale in der y-Richtung von vorne nach hinten verschoben wird) dadurch korrigiert, dass der ringförmige Endbereich 11 um die x-Achse verschwenkt wird. Die Verschwenkung erfolgt mittels eines Stellmittels (27), kann aber auch direkt, wie in Figur 3 dargestellt, mittels eines Feststellmittels (26) erzeugt werden, wobei das Feststellmittel an der Parallelführung zwecks Sicherung des Verschwenkungswinkels verbleibt. Zwischen der algebraischen Grösse (Betrag und Vorzeichen) einer Eckenlastfehlerkomponente und der zur Korrektur benötigten Verschwenkung, d.h. der Grösse und Richtung des Drehwinkels besteht ein für die gegebene Wägemodulkonstruktion spezifischer und reproduzierbarer Zusammenhang, welcher in der Entwicklung des Wägemoduls durch empirische Versuche und/oder analytische Berechnungen ermittelt wird.

Wenn beispielsweise bei der in den Figuren 1, 2, 3 abgebildeten Parallelführung 1 bei einer Verschiebung eines Testgewichts 17 (siehe Figur 2) in der x-Richtung von links nach rechts eine negative Eckenlastabweichung gefunden wird (d.h. der angezeigte Gewichtsbetrag bei der rechtsseitigen Gewichtsposition ist kleiner als bei der linksseitigen Position), so kann dies durch eine vom Betrag des Fehlers abhängige Verschwenkung im bezüglich der y-Achse negativen Drehsinn (d.h. im Gegenuhrzeigersinn, wie in Figur 3 gezeigt) korrigiert werden.

Die in Figur 4 dargestellte Parallelführung unterscheidet sich von den vorangehend beschriebenen Ausführungsbeispielen darin, dass an Stelle der Materialbrücken ein Kugelgelenk 25 mit Feststellmitteln 26 zwischen dem oberen ringförmigen Endbereich 11 und dem Zwischenringbereich 10 angeordnet ist. Das Kugelgelenk 25 wird durch eine am Zwischenringbereich 10 ausgebildete ringförmige Kugelzone und durch die an der ringförmigen Kugelzone anliegende innere Kante des ringförmigen Endbereichs 11, gebildet. Diese anliegende innere Kante entspricht der Berührungskreislinie 19. Zur festen Verbindung des Zwischenringbereichs 10 mit dem ringförmigen Endbereich 11 sind Feststellmittel 26 vorgesehen, welche aufgrund ihrer Einstellbarkeit gleichzeitig auch der Justierung der Eckenlast dienen können. Die Anzahl Feststellmittel 26 ist nicht zwingend vorgeschrieben, idealerweise werden aber wie dargestellt, lediglich drei Feststellmittel 26 am Umfang des ringförmigen Endbereichs 11 verteilt, um Verspannungen durch eine statische Überbestimmung zu vermeiden. Selbstverständlich muss den Feststellmitteln 26 auch die Möglichkeit gegeben werden, die Winkelfehler infolge der Justierung der Eckenlast auszugleichen. In Figur 4 ist dies symbolisch mit einer verschwenkbaren Auflage 28 dargestellt.

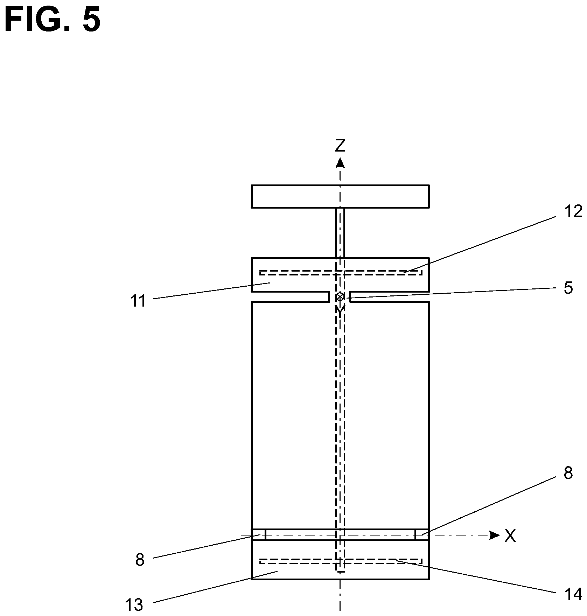

Als Variante der Parallelführung 1 gemäss den vorangehend beschriebenen Figuren kann die gleiche Justierbarkeit der Eckenlastfehlerkomponenten in der x- und y-Richtung auch mit einer Anordnung gemäss Figur 5 erreicht werden. Der obere ringförmige Endbereich 11, welcher die obere Lenkermembranfeder 12 einfasst, ist hier vermittels Biegestellen 5 um eine in y-Richtung (d.h. senkrecht zur Zeichnungsebene) verlaufende Schwenkachse schwenkbar ausgebildet, während der untere ringförmige Endbereich 13, welcher die untere Lenkermembranfeder 14 einfasst, analog um eine in x-Richtung (d.h. in der Zeichnungsebene) verlaufende, durch die Biegestelle 8 gebildete Schwenkachse schwenkbar ausgebildet ist. Die Korrektur des Eckenlastfehlers in x-Richtung erfolgt hier durch Verschwenken des oberen ringförmigen Endbereichs 11, und die Korrektur des Eckenlastfehlers in y-Richtung erfolgt durch Verschwenken des unteren ringförmigen Endbereichs 13.

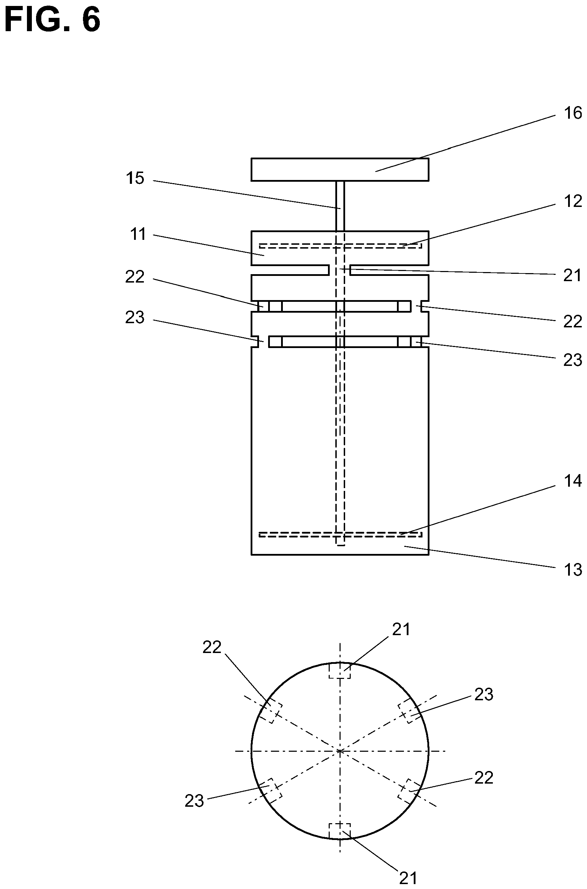

Figur 6 zeigt eine weitere mögliche Ausführung des Erfindungsgedankens, mit drei um je 60º versetzten Ausnehmungspaaren und damit drei Biegestellepaaren 21, 22, 23. Die übrigen durch Bezugsziffern gekennzeichneten Elemente entsprechen der Ausführung gemäss den Figuren 1 bis Figur 3. Analoge Anordnungen mit einer noch höheren Zahl von gleichmässig versetzten Biegestellepaaren sind ebenfalls denkbar.

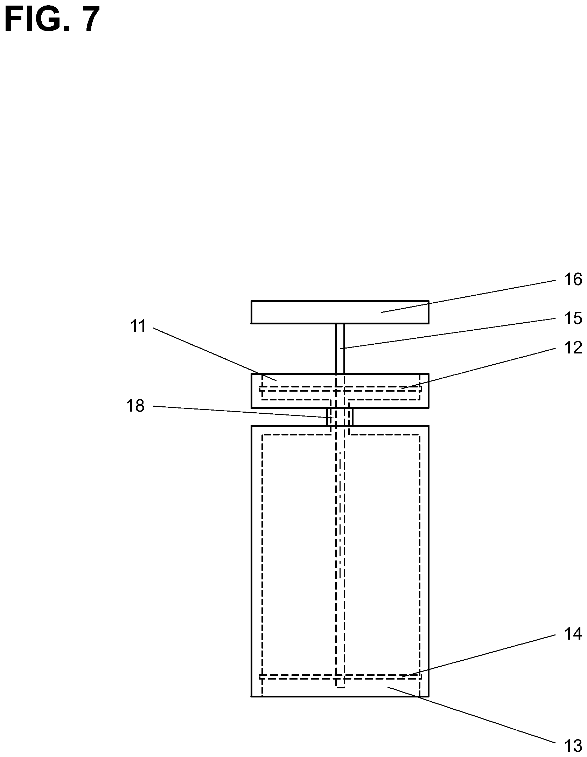

Figur 7 zeigt eine Ausführung, bei der der feststehende Parallelschenkel nahe unterhalb der oberen Lenkermembranfeder 12 eine tiefe Einschnürung besitzt, wobei die dünnwandige ringförmige Einschnürung 18 eine plastisch und/oder elastisch verformbare Biegestelle bildet, so dass der ringförmige obere Endbereich 11 des feststehenden Parallelschenkels um jede beliebige Horizontalachse gegenüber dem die untere Lenkermembranfeder 14 umschliessenden unteren Endbereich 13 verschwenkt werden kann. Die ringförmige Einschnürung 18 muss eine Bohrung aufweisen, welche die Durchführung des beweglichen Parallelschenkels 15 erlaubt, damit am oberen Ende des beweglichen Parallelschenkels 15 ein Lastaufnehmer 16 befestigt werden kann.

Bei den Ausführungen gemäss den Figuren 1, 2, 3, 4 und 5 sind die kartesischen Achsenrichtungen x und y durch die Biegestellepaare 5, 8 oder die Feststellelemente 26 gegeben. Bei der Ausführung gemäss der Figur 6 kann z.B. als x-Richtung die Verbindungsrichtung eines ersten Biegestellepaares 21 gewählt werden, während im Falle der Figur 7 eine x-Richtung frei gewählt werden kann, wobei die y-Richtung jeweils durch eine 90º-Drehung im Gegenuhrzeigersinn aus der x-Richtung hervorgeht und die z-Richtung durch die vertikale Symmetrieachse der Parallelführung gegeben ist. Bei den Ausführungen gemäss den Figuren 1 bis 6 drängen sich offensichtlich spezielle, durch die Biegestellepaare und/oder Feststellelemente 26 gegebene Richtungen als x- und Y-Richtung auf. Infolge der geometrischen Zentralsymmetrie sämtlicher Ausführungen in Bezug auf die z-Achse des feststehenden Parallelschenkels ist der Zusammenhang zwischen Eckenlastabweichung und zugehöriger Korrektur durch Verschwenkung der oberen gegenüber der unteren Lenkermembranfeder isotrop gegenüber Drehungen des x/y-Achsenkreuzes um die z-Achse. Somit kann im Prinzip jede beliebige Horizontalrichtung (in Bezug auf die Betriebsstellung der Parallelführung) zur x-Richtung und die jeweils dazu orthogonale Horizontalrichtung zur y-Richtung erklärt werden. In der Praxis kann es allerdings bevorzugt sein, dass bestimmte, z.B. durch die Biegestellenpaare gegebene Richtungen als Verschiebe- und Drehmomentrichtungen für die Eckenlastjustierung vorgeschrieben werden, um das Justierverfahren exakt nachvollziehbar und überprüfbar zu gestalten.

Bei den gezeigten Ausführungsbeispielen wurde die bevorzugte Ausgestaltung mit rotationssymmetrisch ausgestalteten Parallelführungen dargestellt und beschrieben. Wie bereits weiter oben beschrieben, muss die Mittellängsachse des feststehenden Parallelschenkels nicht zwingend mit der Mittellängsachse des beweglichen Parallelschenkels zusammenfallen. Die Mittellängsachse des beweglichen Parallelschenkels kann auch parallel und beabstandet zur Mittellängsachse des feststehenden Parallelschenkels angeordnet sein. Auch die Schwenkachsen müssen nicht zwingend die Mittellängsachse des feststehenden Parallelschenkels schneiden.

In den Ausführungsbeispielen wurden bevorzugt Lenkermembranfedern dargestellt. Selbstverständlich können auch Parallellenkerelemente zur Verbindung des beweglichen Parallelschenkels mit dem feststehenden Parallelschenkel verwendet werden, die nicht als Membranfeder ausgestaltet sind. Dies wird insbesondere dann der Fall sein, wenn beispielsweise die Mittellängsachse des feststehenden Parallelschenkels parallel und beabstandet zur Mittellängsachse des feststehenden Parallelschenkels angeordnet ist.

### Bezugszeichenliste

- 1: Parallelführung
- 2: feststehender Parallelschenkel
- 3: erste horizontale Ausnehmungen
- 4: erster Durchmesser, erste Schwenkachse
- 5: erste Materialbrücken oder Biegestelle
- 6: zweite horizontale Ausnehmungen
- 7: zweiter Durchmesser, zweite Schwenkachse
- 8: zweite Materialbrücken oder Biegestelle
- 9: seitliche Zugangsöffnung
- 10: Zwischenringbereich
- 11: oberer Endbereich von 2
- 12: obere, von 11 eingefasste Lenkermembranfeder
- 13: unterer Endbereich von 2
- 14: untere, von 13 eingefasste Lenkermembranfeder
- 15: Beweglicher Parallelschenkel,
- 16: Lastaufnehmer, Waagschale
- 17: Testgewicht
- 18: ringförmige Einschnürung
- 19: Berührungskreislinie
- 23, 22, 21: Biegestellepaare
- 25: Kugelgelenk
- 26: Feststellmittel
- 27: Stellmittel
- 28: verschwenkbare Auflage

## Patentansprüche

1. Parallelführung (1) mit einem im Betriebszustand der Parallelführung (1) vertikal angeordneten, einen oberen und einen unteren Endbereich (11, 13) aufweisenden feststehenden Parallelschenkel (2), welcher einen beweglichen Parallelschenkel (15), dessen Mittellängsachse im Betriebszustand vertikal verläuft, umschliesst, ferner mit einem am oberen Endbereich (11) festgelegten ersten Parallellenkerelement (12) und mit einem am unteren Endbereich (13) festgelegten zweiten Parallellenkerelement (14), mittels welchen Parallellenkerelementen (13, 14) der bewegliche Parallelschenkel (15) mit dem feststehenden Parallelschenkel (2) verbunden und vertikal beweglich geführt ist und der bewegliche Parallelschenkel (15) mit einem Lastaufnehmer (16) und mit einer Kraftmesszelle in lastübertragender Weise verbindbar ist, **dadurch gekennzeichnet, dass** der obere Endbereich (11) und der untere Endbereich (13) über mindestens ein Biegestellenpaar (5, 8, 21, 22, 23) und/oder über mindestens ein Kugelgelenk (25) und/oder über mindestens eine ringförmige Einschnürung (18) miteinander verbunden sind, wobei die Endbereiche (11, 13) zur Korrektur eines Eckenlastfehlers gegeneinander um mindestens eine Schwenkachse verschwenkbar sind und wobei
• die mindestens eine Schwenkachse durch die zwei Biegestellen eines Biegestellenpaares (5, 8, 21, 22, 23) verläuft und die Mittellängsachse des beweglichen Parallelschenkels (15) in einer senkrechten Ebene zwischen den beiden Biegestellen eines Biegestellenpaars (5, 8, 21, 22, 23) angeordnet ist, oder
• die mindestens eine Schwenkachse in einer, eine Berührungskreislinie (19) des Kugelgelenks (25) beinhaltenden Ebene angeordnet ist und die Mittellängsachse des beweglichen Parallelschenkels (15) innerhalb der Berührungskreislinie (19) des Kugelgelenks (25) angeordnet ist, oder
• die mindestens eine Schwenkachse in einer, die neutrale Faser der ringförmigen Einschnürung (18) beinhaltenden Ebene angeordnet ist und die Mittellängsachse des beweglichen Parallelschenkels (15) innerhalb einer Bohrung der ringförmigen Einschnürung angeordnet ist.

2. Parallelführung (1) nach Anspruch 1, **dadurch gekennzeichnet, dass** die mindestens eine Schwenkachse und die Mittellängsachse des beweglichen Parallelschenkels (15) einen gemeinsamen Schnittpunkt aufweisen.

3. Parallelführung (1) nach Anspruch 1 oder 2, **dadurch gekennzeichnet, dass** die mindestens eine Schwenkachse orthogonal zur Mittellängsachse des beweglichen Parallelschenkels (15) angeordnet ist.

4. Parallelführung (1) nach einem der Ansprüche 1 bis 3, **dadurch gekennzeichnet, dass** mindestens ein Feststellmittel (26) zwischen den gegeneinander verschwenkbaren Endbereichen (11, 13) zur Fixierung und Justierung der verschwenkbaren Endbereiche (11, 13) zueinander vorhanden ist.

5. Parallelführung (1) nach einem der Ansprüche 1 bis 4, **dadurch gekennzeichnet, dass** der feststehende Parallelschenkel (2) rotationssymmetrisch ausgebildet ist und die Parallellenkerelemente als weichelastische Lenkermembranfedern (12, 14) ausgebildet sind.

6. Parallelführung (1) nach einem der Ansprüche 1 bis 5, **dadurch gekennzeichnet, dass** die Mittellängsachse des feststehenden Parallelschenkels (2) und die Mittellängsachse des beweglichen Parallelschenkels (15) zusammenfallen.

7. Parallelführung (1) nach einem der Ansprüche 1 bis 6, **dadurch gekennzeichnet, dass** durch mindestens zwei seitliche Ausnehmungen (3, 6) zwischen dem oberen Endbereich (11) und dem unteren Endbereich (13) des feststehenden Parallelschenkels (2) mindestens ein Biegestellenpaar (5, 8, 21, 22, 23) ausgebildet ist.

8. Parallelführung (1) nach einem der Ansprüche 1 bis 6, **dadurch gekennzeichnet, dass** in einer zwischen den Endbereichen (11, 13) liegenden, im Betriebszustand der Parallelführung (1) horizontalen ersten Ebene zwei erste Ausnehmungen (3) von diametral gegenüberliegenden Seiten des feststehenden Parallelschenkels (2) bis nahe zu einem ersten Durchmesser (4) des feststehenden Parallelschenkels (2) geführt sind, so dass zwischen den zwei ersten Ausnehmungen (3) zwei schmale erste Materialbrücken (5) ausgebildet sind, dass ferner in einer zweiten horizontalen Ebene, welche in Bezug auf die Betriebsstellung der Parallelführung (1) unterhalb der ersten horizontalen Ebene verläuft, zwei zweite Ausnehmungen (6) geführt sind, welche von diametral gegenüberliegenden Ausgangspunkten senkrecht unterhalb der genannten ersten Materialbrücken (5) bis nahe zu einem zweiten Durchmesser (7) des feststehenden Parallelschenkels (2) geführt sind, so dass zwischen den beiden zweiten Ausnehmungen (6) ebenfalls nur schmale zweite Materialbrücken (8) ausgestaltet sind und wodurch zwischen den ersten und zweiten Ausnehmungen (3, 6) ein Zwischenringbereich (10) ausgebildet ist, über welchen Zwischenringbereich (10) der obere Endbereich (11) durch die zwei ersten Materialbrücken (5) und durch die beiden zweiten Materialbrücken (8) mit dem unteren Endbereich (13) verbunden sind, wobei die ersten und zweiten Materialbrücken (5, 8) zusammen mit dem Zwischenringbereich (10) eine kardanische Verbindung der Endbereiche (11, 13) bilden.

9. Parallelführung (1) nach einem der Ansprüche 1 bis 6, **dadurch gekennzeichnet, dass** in einer ersten im Betriebszustand der Parallelführung (1) horizontalen Ebene zwei erste Ausnehmungen von diametral gegenüberliegenden Seiten des feststehenden Parallelschenkels (2) bis nahe zu einem ersten Durchmesser des feststehenden Parallelschenkels (2) geführt sind, so dass zwischen den zwei ersten Ausnehmungen nur zwei schmale erste Materialbrücken (21) ausgebildet sind, dass ferner in weiteren Horizontalebenen, welche in Bezug auf den Betriebszustand der Parallelführung (1) unterhalb der ersten Horizontalebene verlaufen, weitere Paare von Ausnehmungen, von jeweils diametral gegenüberliegenden Ausgangspunkten bis nahe zu einem Durchmesser des feststehenden Parallelschenkels (2) geführt sind, so dass durch die weiteren Paare von Ausnehmungen entsprechend weitere Paare von diametral gegenüberliegenden Materialbrücken (22, 23) ausgebildet sind, wobei diese Paare jeweils um gleiche Winkelsegmente gegeneinander versetzt sind und welche Materialbrücken (21, 22, 23) zusammen mit den durch die Ausnehmungen erzeugten Zwischenringbereichen eine allseitig schwenkbare Lagerung des die dort befindliche Lenkermembranfeder (12, 14) umfassenden Endbereichs (11, 13) bilden.

10. Parallelführung (1) nach einem der Ansprüche 1 bis 9, **dadurch gekennzeichnet, dass** der feststehende Parallelschenkel (2) am oberen Endbereich (11) oder am unteren Endbereich (13) oder, sofern vorhanden, an einem Zwischenbereich (10) gegen den Untergrund abgestützt ist.

11. Parallelführung (1) nach einem der Ansprüche 1 bis 10, **dadurch gekennzeichnet dass** das mindestens eine Biegestellenpaar (5, 8, 18, 21, 22, 23) durch die Kraft- oder Drehmomentanwendung plastisch deformierbar ist, so dass durch die plastische Deformation der Biegestellenpaare (5, 8, 18, 21, 22, 23) eine bleibende Verschwenkung der Endbereiche (11, 13) gegeneinander um die mindestens eine Schwenkachse (4, 7), und damit eine bleibende Korrektur des Eckenlastfehlers erzeugbar ist.

12. Parallelführung (1) nach Anspruch 11, **dadurch gekennzeichnet dass** der jeweilige justierbare Endbereich (11, 13) des feststehenden Parallelschenkels Ansatzstellen zum Ansetzen eines geeigneten, ein Drehmoment erzeugenden und nach der Justierung wieder entfernbaren Werkzeugs aufweist.

13. Parallelführung (1) nach einem der Ansprüche 1 bis 12, **dadurch gekennzeichnet dass** der justierbare Endbereich (11, 13) des feststehenden Parallelschenkels (2) für die Kraft- oder Drehmomentanwendung geeignete Stellmittel (27) in der Form von Stellschrauben, Exzenterschrauben, Differentialgewindeschrauben, verschiebbaren Keilen, Hebeln oder Konuszapfen enthält.

14. Parallelführung (1) nach einem der Ansprüche 1 bis 13, **dadurch gekennzeichnet dass** der feststehende Parallelschenkel (2) in der Betriebsstellung der Parallelführung (1) ein im Wesentlichen gerader, senkrecht stehender, kreisrunder Hohlzylinder ist.

15. Parallelführung(1) nach einem der Ansprüche 1 bis 14, **dadurch gekennzeichnet dass** der feststehende Parallelschenkel (2) in der Betriebsstellung der Parallelführung (1) ein gerader, im Wesentlichen senkrecht stehender Rohrabschnitt ist, welcher ein polygonales, insbesondere quadratisches, hexagonales oder oktogonales Rohrprofil aufweist.

16. Parallelführung(1) nach einem der Ansprüche 1 bis 15, **dadurch gekennzeichnet, dass** der feststehende Parallelschenkel (2) eine seitliche Zugangsöffnung (9) zu einer zwischen den Parallellenkern (12, 14) angeordneten Kraftmesszelle und sofern vorhanden, zu Komponenten einer Signalverarbeitungseinheit aufweist.

17. Gravimetrisches Messinstrument, insbesondere eine Waage oder ein Wägemodul, mit einer Parallelführung nach einem der Ansprüche 1 bis 16.

18. Justierverfahren zur Einstellung der Eckenlastgenauigkeit einer Parallelführung (1) nach einem der Ansprüche 1 bis 16, welche mit einer Kraftmesszelle und einem Lastaufnehmer wirkverbunden ist und die Kraftmesszelle mit einer die Messsignale der Kraftmesszelle verarbeitenden Signalverarbeitungseinheit verbunden ist, **gekennzeichnet durch** die folgenden Schritte:
• dass in einem ersten Schritt ein Testgewicht (17) in der Mitte des Lastaufnehmers (16) platziert und eine Anzeige der Signalverarbeitungseinheit auf "Null" gestellt (tariert) wird;
• dass in einem zweiten Schritt das Testgewicht (17), vorzugsweise gegebenenfalls in orthogonaler Richtung zu einer ersten Schwenkachse (7) verschoben und am Rande des Lastaufnehmers (16) platziert wird,
• dass in einem dritten Schritt der obere Endbereich (11) zum unteren Endbereich (13) soweit um die erste Schwenkachse (7) verschwenkt wird, bis die Anzeige den Wert "Null" anzeigt;
• dass in einem vierten Schritt das Testgewicht (17) in Richtung der ersten Schwenkachse (7) verschoben und am Rande des Lastaufnehmers (16) platziert wird;
• dass in einem fünften Schritt der obere Endbereich (11) zum unteren Endbereich (13) um eine zur ersten Schwenkachse (7) orthogonal angeordneten zweiten Schwenkachse (4) soweit verschwenkt wird, bis die Anzeige den Wert "Null" anzeigt.

## Claims

1. Parallel-guiding mechanism (1) comprising a stationary parallel leg (2) which in the operating state of the parallel-guiding mechanism is oriented vertically and has an upper and a lower end portion (11, 13), wherein said stationary parallel leg (2) surrounds a movable parallel leg (15) whose central longitudinal axis is oriented vertically when in the operating state, further comprising a first parallel-guiding element (12) fastened to the upper end portion (11) and a second parallel-guiding element (14) fastened to the lower end portion (13), wherein by means of said parallel-guiding elements (12, 14) the movable parallel leg (15) is connected to the stationary parallel leg (2) and guided in vertical movement and wherein the movable parallel leg (15) is designed to form a force-transmitting connection from a load receiver (16) to a force-measuring cell,
**characterized in that**
the upper end portion (11) and the lower end portion (13) are connected to each other through at least one pair of bending zones (5, 8, 21, 22, 23) and/or at least one spherical joint (25) and/or at least one ring-shaped constriction (18), so that for the correction of a corner load error the end portions (11, 13) can be tilt-adjusted relative to each other about at least one tilt axis, wherein
- the at least one tilt axis passes through the two bending zones of a pair of bending zones (5, 8, 21, 22, 23) and the central longitudinal axis of the movable parallel leg (15) is arranged in a vertical plane between the two bending zones of a pair of bending zones (5, 8, 21, 22, 23), or
- the at least one tilt axis is arranged in a plane that contains a contact circle (19) of the spherical joint (25), and the central longitudinal axis of the movable parallel leg (15) is arranged inside the contact circle (19) of the spherical joint (25), or
- the at least one tilt axis is located in a plane that contains the neutral fiber of the ring-shaped constriction (18), and the central longitudinal axis of the movable parallel leg (15) is arranged within a passage hole of the ring-shaped constriction.

2. Parallel-guiding mechanism (1) according to claim 1, **characterized in that** the at least one tilt axis and the central longitudinal axis of the movable parallel leg (15) have a point of intersection in common.

3. Parallel-guiding mechanism (1) according to claim 1 or 2, **characterized in that** the at least one tilt axis is arranged orthogonal to the central longitudinal axis of the movable parallel leg (15).

4. Parallel-guiding mechanism (1) according to one of the claims 1 to 3, **characterized in that** at least one fixation means (26) is arranged between the end portions (11, 13) that are tilt-adjustable relative to each other, wherein said fixation means (26) serves to secure and adjust the tilt-adjustable end portions (11, 13) in relation to each other.

5. Parallel-guiding mechanism (1) according to one of the claims 1 to 4, **characterized in that** the stationary parallel leg (2) is of a rotationally symmetric configuration and the parallel-guiding elements are configured as soft elastic diaphragm guide springs (12, 14).

6. Parallel-guiding mechanism (1) according to one of the claims 1 to 5, **characterized in that** the central longitudinal axis of the stationary parallel leg (2) and the central longitudinal axis of the movable parallel leg (15) coincide with each other.

7. Parallel-guiding mechanism (1) according to one of the claims 1 to 6, **characterized in that** at least one pair of bending zones (5, 8, 21, 22, 23) is formed by at least two lateral incisions (3, 6) between the upper end portion (11) and the lower end portion (13) of the stationary parallel leg (2).

8. Parallel-guiding mechanism (1) according to one of the claims 1 to 6, **characterized in that** in a first plane which is located between the end portions (11, 13) and horizontally oriented in the operating state of the parallel-guiding mechanism (1), there are two first incisions (3) starting from diametrically opposite points of the stationary parallel leg (2) and ending up close to a first diameter (4) of the stationary parallel leg (2), so that two narrow first material bridges (5) are formed between the two first incisions (3), and further that in a second horizontal plane which is located below the first horizontal plane in the operating state of the parallel-guiding mechanism (1), there are two second incisions (6) starting from diametrically opposite points vertically below said first material bridges (5) and ending up close to a second diameter (7) of the stationary parallel leg (2), so that between the two second incisions (6) there are likewise only narrow second material bridges (8) left in place, whereby between the first and second incisions (3, 6) an intermediate ring portion (10) is formed through which the upper end portion (11) is connected by way of the two first material bridges (5) and the two second material bridges (8) to the lower end portion (13), wherein the first and second material bridges (5, 8) together with the intermediate ring portion (10) form a gimballed connection between the end portions (11, 13).

9. Parallel-guiding mechanism (1) according to one of the claims 1 to 6, **characterized in that** in a first plane which is horizontally oriented in the operating state of the parallel-guiding mechanism (1), there are two first incisions starting from diametrically opposite points of the stationary parallel leg (2) and ending up close to a first diameter of the stationary parallel leg (2), so that only two narrow first material bridges (21) are left in place between the two first incisions, and that in further horizontal planes which are located below the first horizontal plane in the operating state of the parallel-guiding mechanism (1), there are further pairs of incisions wherein the incisions of each pair start from diametrically opposite points and end up close to a diameter of the stationary parallel leg (2), so that as a result of the further pairs of incisions there are likewise further pairs of diametrically opposite material bridges (22, 23) being formed, wherein said pairs are offset from each other at equal angular intervals, and wherein the material bridges (21, 22, 23) together with the intermediate ring sections produced by the incisions form a support on which the upper end portion (11, 13) with the diaphragm guide spring (12, 14) framed by it can be tilt-adjusted in all directions.

10. Parallel-guiding mechanism (1) according to one of the claims 1 to 9, **characterized in that** the stationary parallel leg (2) is supported on solid ground at the upper end portion (11) or at the lower end portion (13) or, if applicable, at an intermediate portion (10).

11. Parallel-guiding mechanism (1) according to one of the claims 1 to 10, **characterized in that** the at least one pair of bending zones (5, 8, 18, 21, 22, 23) can be plastically deformed by applying a force or a torque, so that as a result of the plastic deformation of the pairs of bending zones (5, 8, 18, 21, 22, 23) a permanent tilt-adjustment of the end portions (11, 13) relative to each other can be effected about the at least one tilt axis (4, 7), whereby a permanent correction of the corner load error can be achieved.

12. Parallel-guiding mechanism (1) according to one of the claims 1 to 11, **characterized in that** whichever end portion (11, 13) of the stationary parallel leg (2) is adjustable is provided with gripping locations for the engagement of a suitable torque-producing tool which can be removed again after the adjustment has been made.

13. Parallel-guiding mechanism (1) according to one of the claims 1 to 12, **characterized in that** the adjustable end portion (11, 13) of the stationary parallel leg (2) comprises suitable adjustment-setting means (27) to apply the force or torque, such as adjustment screws, eccentric screws, differential screws, adjustable wedges, levers, or conical pegs.

14. Parallel-guiding mechanism (1) according to one of the claims 1 to 13, **characterized in that** the stationary parallel leg (2) in the operating position of the parallel-guiding mechanism (1) is an essentially straight vertical circular hollow cylinder.

15. Parallel-guiding mechanism (1) according to one of the claims 1 to 14, **characterized in that** the stationary parallel leg (2) in the operating position of the parallel-guiding mechanism (1) is an essentially straight vertical tubular section which has a polygonal - in particular square, hexagonal or octagonal - tubular profile.

16. Parallel-guiding mechanism (1) according to one of the claims 1 to 12, **characterized in that** the stationary parallel leg (2) has a lateral access opening (9) allowing access to a force-measuring cell that is arranged between the parallel guides (12, 14) and, if applicable, to the components of a signal-processing unit.

17. Gravimetric measuring instrument, in particular a balance or a weighing module, with a parallel-guiding mechanism according to one of the claims 1 to 16.

18. Adjustment method for setting the corner load accuracy of a parallel-guiding mechanism (1) according to one of the claims 1 to 13 which is functionally connected to a force-measuring cell and a load receiver, wherein the force-measuring cell is connected to a signal-processing unit serving to process the measurement signals of the force-measuring cell, **characterized by** the following steps, wherein:
- in a first step, a test weight (17) is placed in the middle of the load receiver (16), and the indicator is "tared" (reset to zero);
- in a second step, the test weight (17) is moved preferably in the direction perpendicular to a first tilt axis (7), if applicable, and placed at the edge of the load receiver (16);
- in a third step, the upper end portion (11) is tilt-adjusted in relation to the lower end portion (13) about the first tilt axis (7) until the indicator displays a value of zero;
- in a fourth step, the test weight (17) is moved in the direction of the first tilt axis (7) and placed at the edge of the load receiver (18);
- in fifth step, the upper end portion (11) is tilt-adjusted in relation to the lower end portion (13) about a second tilt axis (4) oriented at a right angle to the first tilt axis (7), until the indicator displays a value of zero.

## Revendications

1. Guidage parallèle (1) avec une branche parallèle fixe (2) disposée verticalement dans l'état de fonctionnement du guidage parallèle (1) et présentant une région terminale supérieure et une région terminale inférieure (11, 13), laquelle entoure une branche parallèle mobile (15) dont l'axe longitudinal médian s'étend verticalement dans l'état de fonctionnement, en outre avec un premier élément de direction parallèle (12) fixé sur la région terminale supérieure (11) et avec un deuxième élément de direction parallèle (14) fixé à la région terminale inférieure (13), les éléments de direction parallèles (12, 14) permettant de relier la branche parallèle mobile (15) à la branche parallèle fixe (2), et de la guider verticalement de façon mobile, et de relier la branche parallèle mobile (15) à un récepteur de charge (16) et à une cellule de mesure de force avec transmission de charge,
**caractérisé en ce que**
la région terminale supérieure (11) et la région terminale inférieure (13) sont reliées l'une à l'autre par au moins une paire de points de flexion (5, 8, 21, 22, 23) et/ou par au moins un joint à rotule (25) et/ou par au moins une constriction annulaire (18), dans lequel les régions terminales (11, 13) peuvent être pivotées l'une par rapport à l'autre autour d'au moins un axe de pivotement pour corriger une erreur de charge de coin, et dans lequel
- l'au moins un axe de pivotement s'étend à travers les deux points de flexion d'une paire de points de flexion (5, 8, 21, 22, 23) et l'axe longitudinal médian de la branche parallèle mobile (15) est disposé dans un plan vertical entre les deux points de flexion d'une paire de points de flexion (5, 8, 21, 22, 23), ou
- l'au moins un axe de pivotement est disposé dans un plan incluant une ligne circulaire de contact (19) du joint à rotule (25), et l'axe longitudinal médian de la branche parallèle mobile (15) est disposé à l'intérieur de la ligne circulaire de contact (19) du joint à rotule (25), ou
- l'au moins un axe de pivotement est disposé dans un plan incluant une fibre neutre de la constriction annulaire (18), et l'axe longitudinal médian de la branche parallèle mobile (15) est disposé à l'intérieur d'un perçage de la constriction annulaire.

2. Guidage parallèle (1) selon la revendication 1, **caractérisé en ce que** l'au moins un axe de pivotement et l'axe longitudinal médian de la branche parallèle mobile (15) présentent une intersection commune.

3. Guidage parallèle (1) selon la revendication 1 ou 2, **caractérisé en ce que** l'au moins un axe de pivotement est disposé orthogonalement à l'axe longitudinal médian de la branche parallèle mobile (15).

4. Guidage parallèle (1) selon l'une des revendications 1 à 3, **caractérisé en ce qu'**il est prévu au moins un moyen de blocage (26) entre les régions terminales (11, 13) aptes à pivoter l'une par rapport à l'autre, pour fixer et ajuster les régions terminales pivotantes (11, 13) l'une par rapport à l'autre.

5. Guidage parallèle (1) selon l'une des revendications 1 à 4, **caractérisé en ce que** la branche parallèle fixe (2) est conçue symétrique en rotation et les éléments de direction parallèles sont conçus comme des ressorts à membrane directeurs (12, 14) élastiques mous.

6. Guidage parallèle (1) selon l'une des revendications 1 à 5, **caractérisé en ce que** l'axe longitudinal médian de la branche parallèle fixe (2) et l'axe longitudinal médian de la branche parallèle mobile (15) coïncident.

7. Guidage parallèle (1) selon l'une des revendications 1 à 6, **caractérisé en ce qu'**au moins une paire de points de flexion (5, 8, 21, 22, 23) est formée par au moins deux évidements latéraux (3, 6) entre la région terminale supérieure (11) et la région terminale inférieure (13) de la branche parallèle fixe (2).

8. Guidage parallèle (1) selon l'une des revendications 1 à 6, **caractérisé en ce que** dans un premier plan s'étendant entre les régions terminales (11, 13), horizontal dans l'état de fonctionnement du guidage parallèle (1), deux premiers évidements (3) sont guidés depuis des côtés diamétralement opposés de la branche parallèle fixe (2) et presque jusqu'à un premier diamètre (4) de la branche parallèle fixe (2), de manière à former deux premiers ponts de matériau étroits (5) entre les deux premiers évidements (3), et **en ce que** deux deuxièmes évidements (6) sont guidés dans un deuxième plan horizontal s'étendant en dessous du premier plan horizontal par rapport à la position de fonctionnement du guidage parallèle (1), lesquels sont guidés à partir de points de départ diamétralement opposés, perpendiculairement en dessous desdits premiers ponts de matériau étroits (5), presque jusqu'à un deuxième diamètre (7) de la branche parallèle fixe (2), de manière à ne former plus que des deuxièmes ponts de matériau (8) également étroits entre les deux deuxièmes évidements (6), et moyennant quoi une région annulaire intermédiaire (10) entre les premiers et deuxièmes évidements (3, 6), ladite région annulaire intermédiaire, ladite région annulaire intermédiaire (10) reliant la région terminale supérieure (11) à la région terminale inférieure (13) par le biais des deux premiers ponts de matériau (5) et par le biais des deux deuxièmes ponts de matériau (8), les premiers et deuxièmes ponts de matériau (5, 8) formant une liaison à cardan des régions terminales (11, 13) ensemble avec la région annulaire intermédiaire (10).

9. Guidage parallèle (1) selon l'une des revendications 1 à 6, **caractérisé en ce que** dans un premier plan horizontal dans l'état de fonctionnement du guidage parallèle (1), deux premiers évidements sont guidés depuis des côtés diamétralement opposés de la branche parallèle fixe (2) et presque jusqu'à un premier diamètre de la branche parallèle fixe (2), de manière à ne former plus que deux premiers ponts de matériau étroits (21) entre les deux premiers évidements, et **en ce que** dans d'autres plans horizontaux s'étendant en outre en dessous du premier plan horizontal par rapport à la position de fonctionnement du guidage parallèle (1), d'autres paires d'évidements sont guidés respectivement à partir de points de départ diamétralement opposés, presque jusqu'à un diamètre de la branche parallèle fixe (2), de manière à ce que les autres paires d'évidements forment d'autres paires de ponts de matériau (22, 23) diamétralement opposés, ces paires étant respectivement décalés les uns des autres selon des segments angulaires identiques, et lesdits ponts de matériau (21, 22, 23) formant, ensemble avec les région annulaire intermédiaire crées par les évidements, un support apte à pivoter dans toutes les directions pour la région terminale (11, 13) incluant le ressort à membrane d'élément conducteur (12, 14) situé à cet endroit.

10. Guidage parallèle (1) selon l'une des revendications 1 à 9, **caractérisé en ce que** la branche parallèle fixe (2) s'appuie au sol sur la région terminale supérieure (11) ou sur la région terminale inférieure (13) ou, le cas échéant, sur une région intermédiaire (10).

11. Guidage parallèle (1) selon l'une des revendications 1 à 10, **caractérisé en ce que** l'au moins une paire de points de flexion (5, 8, 18, 21, 22, 23) peut se déformer plastiquement sous l'action d'un couple de forces ou de rotation, de telle façon que la déformation plastique des paire de points de flexion (5, 8, 18, 21, 22, 23) permet d'obtenir une inclinaison permanente des régions terminales (11, 13) l'une par rapport à l'autre autour d'au moins un axe de pivotement (4, 7), et donc une correction permanente de l'erreur de charge de coin.

12. Guidage parallèle (1) selon la revendication 11, **caractérisé en ce que** la région terminale ajustable (11, 13) respective de la branche parallèle fixe présente des zones de fixation pour la fixation d'un outil approprié produisant un couple de rotation et apte à être retiré après l'ajustement.

13. Guidage parallèle (1) selon l'une des revendications 1 à 12, **caractérisé en ce que** la région terminale ajustable (11, 13) de la branche parallèle fixe (2) comprend des moyens de réglage (27) appropriés pour l'application du couple de forces ou de rotation, sous la forme de vis de réglage, de vis excentriques, de vis à filet différentiel, de cales déplaçables, de leviers ou de tourillons coniques.

14. Guidage parallèle (1) selon l'une des revendications 1 à 13, **caractérisé en ce que** dans la position de fonctionnement du guidage parallèle (1), la branche parallèle fixe (2) est un cylindre creux circulaire essentiellement droit, placé debout.

15. Guidage parallèle (1) selon l'une des revendications 1 à 14, **caractérisé en ce que** dans la position de fonctionnement du guidage parallèle (1), la branche parallèle fixe (2) est une section de conduit droite et essentiellement verticale, laquelle présente un profil de conduit polygonal, en particulier carré, hexagonal ou octogonal.

16. Guidage parallèle (1) selon l'une des revendications 1 à 15, **caractérisé en ce que** la branche parallèle fixe (2) présente une ouverture d'accès latérale (9) débouchant sur une cellule de mesure de force disposée entre les éléments de direction parallèles (12, 14), et le cas échéant sur des composants d'une unité de traitement de signaux.

17. Instrument de mesure gravimétrique, en particulier une balance ou un module de pesage, avec un guidage parallèle selon l'une des revendications 1 à 16.

18. Procédé d'ajustement pour le réglage de la précision d'une charge de coin d'un guidage parallèle (1) selon l'une des revendications 1 à 16, lequel est relié fonctionnellement à une cellule de mesure de force et à un récepteur de charge, et dans lequel la cellule de mesure de force est reliée à une unité de traitement de signaux traitant les signaux de mesure de la cellule de mesure de force, **caractérisé par** les étapes suivantes:
- dans une première étape, un poids d'essai (17) est placé au centre du récepteur de charge (16) et un indicateur de l'unité de traitement de signaux est mis sur «zéro» (taré);
- dans une deuxième étape, le poids d'essai (17) est de préférence déplacé le cas échéant dans une direction orthogonale à un premier axe de pivotement (7) et placé au bord du récepteur de charge (16),
- dans une troisième étape, la région terminale supérieure (11) est pivotée par rapport à la région terminale inférieure (13) autour du premier axe de pivotement (7) jusqu'à ce que l'indicateur affiche la valeur «zéro»;
- dans une quatrième étape, le poids d'essai (17) est déplacé dans la direction du premier axe de pivotement (7) et placé au bord du récepteur de charge (16);
- dans une cinquième étape, la région terminale supérieure (11) est pivotée par rapport à la région terminale inférieure (13) autour d'un deuxième axe de pivotement (4) disposé orthogonalement par rapport au premier axe de pivotement (7), jusqu'à ce que l'indicateur affiche la valeur «zéro».
